# EUROPEAN PATENT SPECIFICATION

(11) **EP 2 497 631 B1**
(45) Date of publication and mention of the grant of the patent: **10.07.2013**
(21) Application number: 12000086.4
(22) Date of filing: 09.01.2012
(51) Int. Cl.: B29D 30/00, B29D 30/06

(54) **Production method of heavy duty pneumatic tire**
Herstellungsverfahren für Schwerlastluftreifen
Procédé de production de pneu pour fonctionnement intensif

(30) Priority: 08.03.2011 JP 2011049843
(43) Date of publication of application: 12.09.2012
(73) Proprietor: Sumitomo Rubber Industries, Ltd., Hyogo-ken (JP)
(72) Inventor: Oya, Yukihide, Kobe-shi Hyogo 651-0072 (JP)
(74) Representative: Manitz, Finsterwald & Partner GbR

(56) References cited:
- EP-A1- 0 005 899
- EP-A1- 0 713 896
- EP-A1- 2 025 499
- EP-A2- 0 706 878
- GB-A- 1 392 218
- GB-A- 1 448 532
- US-A1- 2010 154 960

## Description

### Technical Field

The present invention relates to a production method of a heavy duty pneumatic tire in which an insulation lies between a carcass ply and an inner liner.

GB 1 392 218 A and GB 1 448 532 A disclose pneumatic tires with elastomeric components effected by radiation.

### Background Art

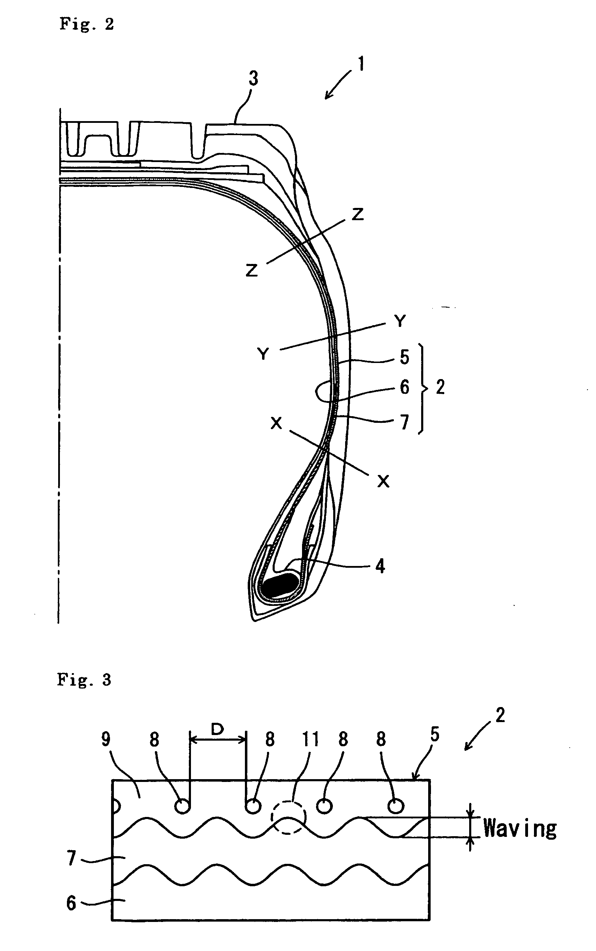

First, a heavy duty pneumatic tire is explained using drawings. Fig. 2 is a cross sectional view of a heavy duty pneumatic tire. Fig. 3 is a partially enlarged cross sectional view of a heavy duty pneumatic tire. As shown in Fig. 2, a heavy duty pneumatic tire 1 has a carcass part 2, a tread part 3 contacting with a road surface, and a bead part 4.

The carcass part 2 is constituted of a carcass ply 5 pasted via an insulation 7 to the outside of an inner liner 6. The inner liner 6 is made of a butyl rubber, and manifests weak adhesion force with the carcass ply 5. For this reason, an insulation excellent in adhesion is allowed to lie between the carcass ply and the inner liner.

As shown in Fig. 3, the carcass ply 5 has a plurality of carcass cords 8 coated by a topping rubber 9.

A heavy duty pneumatic tire is produced by vulcanizing a green tire having the carcass part 2 by a vulcanizing machine.

The interval D between the carcass cords 8 of thus produced heavy duty pneumatic tire varies depending on the position of the cross-section of the tire 1, and is widest at the buttress position Z among the buttress position Z, maximum breadth position Y and bead side position X.

When the Mooney viscosity [ML(1+4) 130°C] of a kneaded rubber as the material of the insulation 7 is less than 45, the rubber flows in vulcanization and the rubber gauges of the inner liner 6 and the insulation7 become thin. Particularly, at the buttress position Z where the interval D between the carcass cords 8 is wide, thinning occurs remarkably.

At thus thinned part, the insulation 7 is sucked into between the carcass cords 8 to reveal a wavy phenomenon, and further, a wavy phenomenon occurs also between the insulation 7 and the inner liner 6 (see, Fig. 3). At a part generating no wavy phenomenon, breakage due to strain concentration does not occur easily even if there is a difference in the hardness between the carcass ply 5 and the insulation 7. However, at a wavy part 11, there is a problem of occurrence of breakage by strain concentration owing to a difference in the hardness between the carcass ply 5 and the insulation 7.

There is an idea of increasing the thickness of insulation to prevent the problem. However, in this case, the weight of the tire increases.

There is also an idea of increasing the Mooney viscosity of the above-described kneaded rubber to solve the problem. However, when the Mooney viscosity exceeds 60, there occurs a problem that the processability of the above-described kneaded rubber lowers and the insulation 7 cannot be formed into a desired shape. For this reason, the wavy phenomenon is suppressed by molding the insulation 7 while controlling the Mooney viscosity of the above-described kneaded rubber in the range of 45 to 60. However, in this case, the wavy phenomenon cannot be suppressed sufficiently in the conventional technology.

As the method for suppressing the wavy phenomenon, various methods other than the above-described technologies have been investigated. However, no effective technology for suppressing the wavy phenomenon without causing other significant influences has been found.

As the method of suppressing the wavy phenomenon, there is proposed a technology in which a carcass ply is irradiated with an electron beam to semi-vulcanize the topping rubber of the carcass ply, thereby suppressing flow of the rubber in green tire vulcanization to prevent generation of the wavy phenomenon (for example, patent document 1). However, this technology is for a structure having a carcass ply pasted directly to an inner liner without using an insulation.

### Prior Art Reference

### Patent Document

Patent Document 1: JP 2008-132736 A

### Summary of the Invention

### Problem to be solved by the Invention

In view of the above-described problem, an object of the present invention is to provide a production method of a heavy duty pneumatic tire being capable of effectively suppressing the wavy phenomenon in a heavy duty pneumatic tire having a carcass ply pasted to an inner liner via an insulation.

### Means for solving the Problem

The invention of Claim 1 is a production method of a heavy duty pneumatic tire comprising
a carcass part formation step of pasting a carcass ply via an insulation to the outside of an inner liner to form a carcass part, and
a vulcanization step of vulcanizing a green tire having the above-described carcass part,
wherein the above-described carcass part formation step comprises
an insulation molding step of molding the above-described insulation and
an electron beam irradiation step of irradiating the above-described insulation with an electron beam having an irradiation voltage of 200 to 600 kV and an irradiation dose of 50 to 200 kGY.

The invention of Claim 2 is the production method of a heavy duty pneumatic tire according to Claim 1, wherein
the Mooney viscosity of a kneaded rubber as the raw material of the above-described insulation is set to 45 to 60 and the rubber is kneaded, and
the rubber hardness (JIS) of the insulation after vulcanization is set to 61 to 67 and the rubber hardness (JIS) of the carcass ply after vulcanization is set to 67 to 73 in the above-described vulcanization step and the above-described insulation is irradiated with an electron beam.

### Effect of the Invention

In the present invention, the wavy phenomenon can be suppressed without increasing the gauge thickness of an insulation, by irradiating the insulation before vulcanization of a green tire with an electron beam having a suitable irradiation voltage and an irradiation dose, thereby semi-vulcanizing the insulation to a suitable degree.

### Brief Explanation of Drawings

Fig. 1 is a cross sectional view of a main section of a heavy duty pneumatic tire produced according to the present invention.
Fig. 2 is a cross sectional view of a heavy duty pneumatic tire.
Fig. 3 is a partially enlarged cross sectional view of a heavy duty pneumatic tire.

### Modes for Carrying Out the Invention

The embodiments of the present invention will be illustrated based on drawings below.

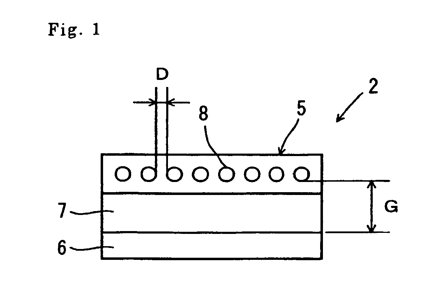

Fig. 1 is a cross sectional view of a main section of a heavy duty pneumatic tire produced according to the present invention. The same parts as in a conventional example shown in Figs. 2 and 3 are endowed with the same marks.

### 1. Production method of heavy duty pneumatic tire

The production method of a heavy duty pneumatic tire of this invention comprises a carcass part formation step of pasting a carcass ply 5 via an insulation 7 to the outside of an inner liner 6 to form a carcass part 2, and a vulcanization step of vulcanizing a green tire having the carcass part 2 (see, Fig. 1).

### (1) Carcass part formation step

The carcass part formation step comprises an insulation molding step of molding the insulation 7 by an extruder or a calendar apparatus, a pasting step of pasting the carcass ply 5 via the insulation 7 to the outside of the inner liner 6, and an electron beam irradiation step of irradiating the insulation 7 with an electron beam.

### (i) Insulation molding step

The insulation molding step is a step in which a kneaded rubber as the raw material of the insulation 7 is kneaded so that its Mooney viscosity is in the range of 45 to 60 and the insulation 7 is molded into a desired shape.

### (ii) Electron beam irradiation step

The electron beam irradiation step is a step of irradiating the insulation 7 with an electron beam having a suitably set irradiation voltage and an irradiation dose before pasting a carcass ply. The irradiation voltage of the electron beam is 200 to 600 kV, preferably 300 to 600 kV. When it is higher than 600 kV, its permeation ability is too large and the beam permeates through the inner liner 6 (butyl rubber layer) to modify the butyl rubber undesirably. The irradiation dose of the electron beam is 50 to 200 kGY, preferably 80 to 150 kGY.

### (2) Vulcanization step

The vulcanization step is a step of pasting the carcass ply 5 to the inner liner 6, then, providing a tread part and the like to form a green tire, followed by performing vulcanization.

In the vulcanization step, vulcanization is performed so that the rubber hardness (JIS) of the insulation 7 becomes 61 to 67 and the rubber hardness (JIS) of the carcass ply 5 becomes 67 to 73 after vulcanization.

### (3) Others

Other steps than the above-described steps, such as a step of forming the carcass ply 5, a step of pasting a tread part 3 and a bead part 4 to the carcass part 2 to form a green tire, and the like, are carried out according to the same manners as in conventional methods.

### 2. Effect of the present embodiment

Since the insulation 7 is irradiated with an electron beam having a suitably set irradiation voltage and irradiation dose before vulcanization of a green tire, the insulation 7 is semivulcanized, flow of the rubber in vulcanization of a green tire is suppressed, and the wavy phenomenon between the insulation 7 and the carcass ply 5 owing to sucking of the rubber can be suppressed, without increasing the gauge thickness of the insulation, as shown in Fig. 1.

### Examples

### (Examples 1 to 8, conventional example, and Comparative Examples 1 to 3)

In these examples, heavy duty pneumatic tires having tire size of 11R22.5 and composed of a ply and a breaker made of steel were produced according to the above-described embodiment in which the irradiation voltage and the irradiation dose of EBR (electron beam), the Mooney viscosity and the rubber hardness of the insulation after vulcanization were set as shown in Tables 1 and 2. The rubber hardness of the insulation after vulcanization was set to a standard value 64.

The heavy duty pneumatic tires of Examples 1 to 8, conventional example and Comparative Examples 1 to 3 produced as described above were measured about items shown in Tables 1 and 2.

The tire was decomposed and an unevenness of rubber gauges was measured by a microscope to give a value as the waving amount.

The adhesive force of the insulation after irradiation with EBR was obtained by measuring the tackiness of a sample sheet at 80°C by a tackiness meter. The measured tackiness was expressed by an index, the value in the conventional example being 100. The smaller the index, the weaker the adhesive force.

The calculated numerical value of ply/inner liner rubber gauge G (mm) is an interval from the adhered surface between the inner liner 6 and the insulation 7 to the carcass cord 8 as shown in Fig. 1, and the smaller this value, the thinner the gauge. The index, the value in the conventional example being 100, is also shown together with the rubber gauge G.

**(Table 1)**

| | **Conventional** | **Example** | | | | |
|---|---|---|---|---|---|---|
| | **Example** | **1** | **2** | **3** | **4** | **5** |
| **Irradiation voltage(kV)** | 0 | 500 | 300 | 300 | 300 | 500 |
| **Irradiation dose (kGY)** | 0 | 1 5 0 | 5 0 | 80 | 200 | 80 |
| **Waving amount (mm)** | 0. 10 | 0. 00 | 0. 00 | 0. 00 | o. 00 | 0. 00 |
| **Adhesive force of insulation after irradiation (index)** | 100 | 4 1 | 74 | 6 1 | 3 0 | 6 1 |
| **Ply/inner liner rubber gauge G(mm)** | 2. 10 | 1. 6 0 | 2. 00 | 1. 90 | 1. 70 | 1. 8 0 |
| **Ply/inner liner rubber gauge (index)** | 100 | 7 6 | 9 5 | 9 0 | 8 1 | 8 6 |
| **Mooney viscosity** | 5 0 | 5 7 | 5 3 | 5 4 | 6 0 | 54 |
| **Rubber hardness of insulation after vulcanization** | 6 4 | 6 4 | 6 4 | 6 4 | 6 4 | 64 |

**(Table 2)**

| | **Example** | | | **Comparative Example** | | |
|---|---|---|---|---|---|---|
| | **6** | **7** | **8** | **1** | **2** | **3** |
| **Irradiation voltage(kV)** | 500 | 200 | 600 | 200 | 300 | 500 |
| **Irradiation dose (kGY)** | 200 | 5 0 | 200 | 3 0 | 3 0 | 2 5 0 |
| **Waving amount (mm)** | o. 00 | 0. 00 | 0. 00 | 0. 0 5 | 0. 0 2 | 0. 00 |
| **Adhesive force of insulation after irradiation (index)** | 3 0 | 7 4 | 3 0 | 8 4 | 8 4 | 2 3 |
| **Ply/inner liner rubber gauge G(mm)** | 1. 6 0 | 2. 0 5 | 1. 6 0 | 2. 10 | 2. 1 0 | 1. 6 0 |
| **Ply/inner liner rubber gauge (index)** | 7 6 | 9 8 | 7 6 | 100 | 100 | 7 6 |
| **Mooney viscosity** | 6 0 | 5 3 | 6 0 | 5 2 | 5 2 | 6 2 |
| **Rubber hardness of insulation after vulcanization** | 6 4 | 6 4 | 6 4 | 6 4 | 6 4 | 6 4 |

### (Consideration)

In all Examples 1 to 8, it could be confirmed that the wavy phenomenon did not occur and the adhesive force of the insulation was a trouble-free value. It is considered that this result is obtained since the irradiation voltage and the irradiation dose are suitable and the insulation is semivulcanized to a suitable extent by irradiation with an electron beam.

Among Comparative Examples 1 to 3 in which the same electron beam irradiation was carried out, Comparative Examples 1 and 2 revealed the wavy phenomenon. In contrast, in Comparative Example 3, the wavy phenomenon did not occur, however, the adhesive force of the insulation lowered significantly. It is considered that this result is obtained since the irradiation dose is too small in Comparative Examples 1 and 2 and the irradiation dose is too large in Comparative Example 3. In the conventional example in which electron beam irradiation was not carried out, a large wavy phenomenon occurred.

In the Examples, the ply/inner liner rubber gauge was smaller than in the conventional example and Comparative Examples 1 and 2, and it could be confirmed that the weight of the heavy duty pneumatic tire could be reduced.

The present invention has been explained above based on the embodiments, but the present invention is not limited to the above-described embodiments. In the range-which is the same as and equivalent to the present invention, the above-described embodiments can be changed variously.

### Description of Marks

- 1: heavy duty pneumatic tire
- 2: carcass part
- 3: tread part
- 4: bead part
- 5: carcass ply
- 6: inner liner
- 7: insulation
- 8: carcass cord
- 9: topping rubber
- 11: wavy part
- D: interval between carcass cords
- G: ply/inner liner rubber gauge
- X: bead side position
- Y: maximum breadth position
- Z: buttress position

## Claims

1. A production method of a heavy duty pneumatic tire (1) comprising
a carcass part formation step of pasting a carcass ply (5) via an insulation (7) to the outside of an inner liner (6) to form a carcass part (2), and
a vulcanization step of vulcanizing a green tire having the above-described carcass part (2),
wherein the above-described carcass part formation step comprises
an insulation molding step of molding the above-described insulation (7) and
an electron beam irradiation step of irradiating the above-described insulation (7) with an electron beam having an irradiation voltage of 200 to 600 kV and an irradiation dose of 50 to 200 kGY.

2. The production method of a heavy duty pneumatic tire (1) according to Claim 1, wherein
the Mooney viscosity of a kneaded rubber as the raw material of the above-described insulation (7) is set to 45 to 60 and the rubber is kneaded, and
the rubber hardness (JIS) of the insulation (7) after vulcanization is set to 61 to 67 and the rubber hardness (JIS) of the ply after vulcanization is set to 67 to 73 in the above-described vulcanization step and the above-described insulation (7) is irradiated with an electron beam.

## Patentansprüche

1. Herstellungsverfahren für einen Schwerlast-Luftreifen (1), umfassend
einen Karkassteil-Bildungsschritt eines Klebens einer Karkasslage (5) über eine Isolation (7) an die Außenseite eines Innerliners (6), um einen Karkassteil (2) zu bilden, und
einen Vulkanisationsschritt eines Vulkanisierens eines Rohreifens, der den oben beschriebenen Karkassteil (2) aufweist,
wobei der oben beschriebene Karkassteil-Bildungsschritt umfasst
einen Isolationsformungsschritt eines Formens der oben beschriebenen Isolation (7) und
einen Elektronenstrahl-Bestrahlungsschritt eines Bestrahlens der oben beschriebenen Isolation (7) mit einem Elektronenstrahl, der eine Bestrahlungsspannung von 200 bis 600 kV und eine Bestrahlungsdosis von 50 bis 200 kGY aufweist.

2. Herstellungsverfahren eines Schwerlast-Luftreifens (1) nach Anspruch 1, wobei
die Mooney-Viskosität eines gekneteten Kautschuks als das Rohmaterial der oben beschriebenen Isolation (7) auf 45 bis 60 festgelegt ist und der Kautschuk geknetet wird, und
die Gummihärte (JIS) der Isolation (7) nach der Vulkanisation auf 61 bis 67 festgelegt wird, und die Gummihärte (JIS) der Lage nach der Vulkanisation in dem oben beschriebenen Vulkanisationsschritt auf 67 bis 73 festgelegt wird, und die oben beschriebene Isolation (7) mit einem Elektronenstrahl bestrahlt wird.

## Revendications

1. Procédé de production d'un bandage pneumatique (1) pour véhicules industriels comprenant
une étape de formation d'une partie de carcasse consistant à appliquer une nappe de carcasse (5) via un isolant (7) sur l'extérieur d'un doublage intérieur (6) pour former une partie de carcasse (2), et
une étape de vulcanisation consistant à vulcaniser un pneumatique cru ayant la partie de carcasse (2) décrite ci-dessus,
dans lequel l'étape de formation de partie de carcasse décrite ci-dessus comprend
- une étape de moulage d'isolant consistant à mouler l'isolant (7) décrit ci-dessus, et
- une étape d'irradiation par faisceau d'électrons consistant à irradier l'isolant (7) décrit ci-dessus avec un faisceau d'électrons ayant un voltage d'irradiation de 200 à 600 kV et une dose d'irradiation de 50 à 200 kGY.

2. Procédé de production d'un bandage pneumatique (1) pour véhicules industriels selon la revendication 1, dans lequel
la viscosité de Mooney d'un caoutchouc pétri à titre de matériau brut de l'isolant (7) décrit ci-dessus est fixée de 45 à 60 et le caoutchouc est pétri, et
la dureté du caoutchouc (JIS) de l'isolant (7) après vulcanisation est fixée de 61 à 67, et la dureté du caoutchouc (JIS) de la nappe après vulcanisation est fixée de 67 à 73 dans l'étape de vulcanisation décrite ci-dessus, et l'isolant décrit ci-dessus (7) est irradié avec un faisceau d'électrons.
